# EUROPEAN PATENT SPECIFICATION

(11) **EP 3 287 352 B1**
(45) Date of publication and mention of the grant of the patent: **26.02.2020**
(21) Application number: 17179282.3
(22) Date of filing: 03.07.2017
(51) Int. Cl.: B62K 15/00, B62K 21/12, B62K 19/18, B62K 19/32

(54) **FOLDING STRUCTURE FOR BICYCLE**
KLAPPSTRUKTUR FÜR EIN FAHRRAD
STRUCTURE PLIANTE DE BICYCLETTE

(30) Priority: 22.08.2016 TW 105126813
(43) Date of publication of application: 28.02.2018
(73) Proprietor: Wang, Shuo-Feng, Taichung City (TW)
(72) Inventor: Wang, Shuo-Feng, Taichung City (TW)
(74) Representative: Michalski Hüttermann & Partner Patentanwälte mbB

(56) References cited:
- CN-Y- 201 325 549
- JP-U- 3 204 556
- US-A- 5 492 350
- US-A1- 2014 356 050

## Description

### Background of the Invention

### 1. Field of the Invention

The present invention relates to a folding structure and, particularly, to a folding structure for a bicycle.

### 2. Description of the Related Art

Taiwan Pat. No. M464387, a family member of US 2014/356 050 A1, discloses a folding bicycle including a first body and a second body hinged to the first body. The first body is pivotally connected to the second body. The first and second bodies are restrained from relative pivotal movements when locked. A locking device is configured for locking the first body to the second body. The locking device includes a first hook mounted on the first body, a second hook mounted on the second body, and a safety catch linked to the first hook. The first and second bodies are pivotal toward one another to allow the first and second hooks to loosely engage with one another. The safety catch is pivotal toward the second hook to allow the first and second hooks to tightly engage with one another.

CN 201325549 Y, which discloses a folding structure according to the preamble of claim 1, describes a folder structure, wherein, when a first half part and a second half part are closed, a hook plate of the first half part and a crankshaft rod on the second half part are mutually buckled and retained.

The problem of TW M464387 is that the locking device deforms after repeated locking operations and the first and second hooks become unable to tightly engage with one another.

The present invention is, therefore, intended to obviate or at least alleviate the problems encountered in the prior art.

### Summary of the Invention

The invention is defined by the features of the independent claim. Preferred embodiments are defined by the features of the dependent claims.

According to the present invention, a folding structure for a bicycle includes a first body and a second body pivotally connected to the first body. A locking device includes a restraining member connected to the first body and position adjustable and angle adjustable with respect to the first body, and includes a locking actuator movably connected to the second body.

The first and second bodies have a first relative position in which the restraining member and the locking actuator are disposed in contact with one another and a second relative position in which the restraining member and the locking actuator disposed apart from one another,

The locking device is adapted to lock the first body to the second body when the first and second bodies are disposed in the first relative position.

The locking actuator is operable to a first position locking first body to the second body and a second position unlocking the first and second bodies.

The first body is locked to the second body and is restrained from pivoting by the cooperation of the locking actuator and the restraining member, with the locking actuator tightly engaged against the restraining member.

It is therefore an objective of the present invention to provide a folding structure including a first body, a second body hinged to the first body, and a locking device operable to lock the first body to the second body.

It is another objective of the present invention that the locking device always locks the first body to the second body securely.

Other objectives, advantages, and new features of the present invention will become apparent from the following detailed description of the invention when considered in conjunction with the accompanied drawings.

### Brief Description of the Drawings

Fig. 1 is a perspective view of a folding structure for a bicycle according to a first embodiment of the present invention.
Fig. 2 is an exploded, perspective view of the folding structure of Fig. 1.
Fig. 3 is a cross-sectional view showing the folding structure of Fig. 1 including a first body locked to a second body and the locking device in a locked position.
Fig. 4 is a cross-sectional view showing the first and second bodies unlocked and the locking device in an unlocked position.
Fig. 5 is a perspective view of a folding structure for a bicycle according to a second embodiment of the present invention.
Fig. 6 is an exploded, perspective view of the folding structure of Fig. 5.
Fig. 7 is a cross-sectional view showing the folding structure of Fig. 5 including a first body locked to a second body and the locking device in a locked position.
Fig. 8 is a perspective view of a folding structure for a bicycle according to a third embodiment of the present invention.
Fig. 9 is an exploded, perspective view of the folding structure of Fig. 8.
Fig. 10 is a cross-sectional view showing the folding structure of Fig. 8.
Fig. 11 is a perspective view of a folding structure for a bicycle according to a fourth embodiment of the present invention.
Fig. 12 is an exploded, perspective view of the folding structure of Fig. 11.
Fig. 13 is a cross-sectional view showing the folding structure of Fig. 11.

### Detailed Description of the Invention

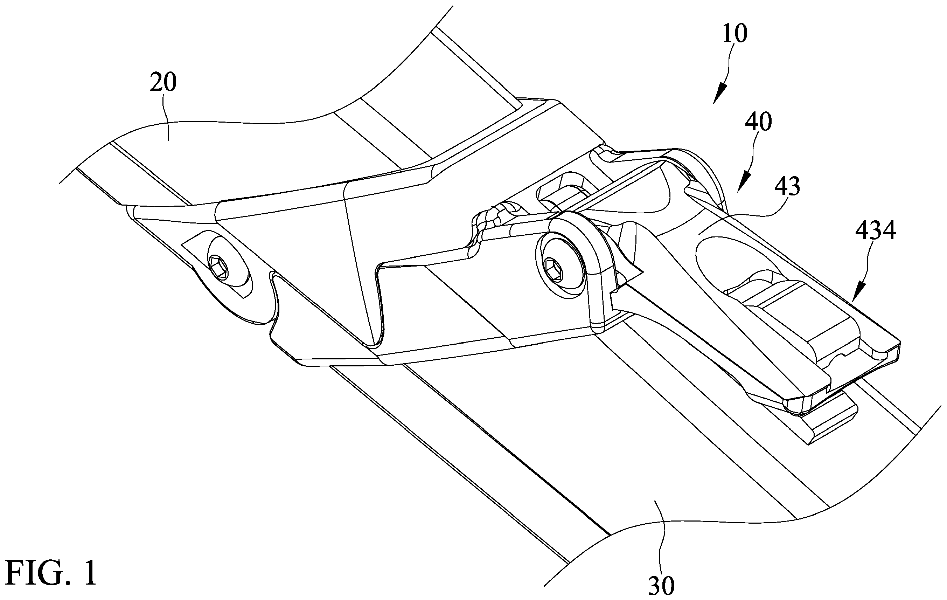

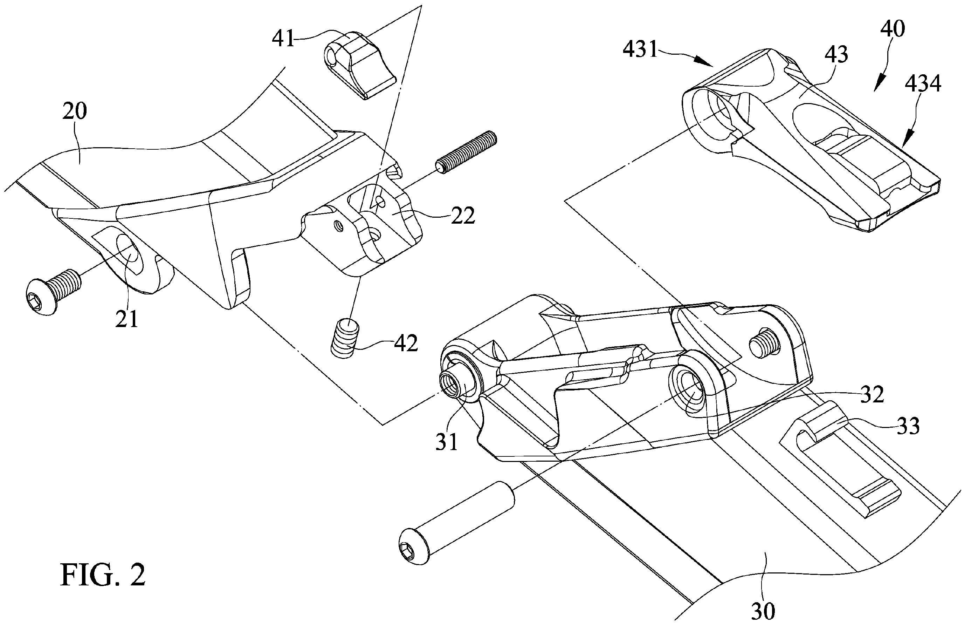

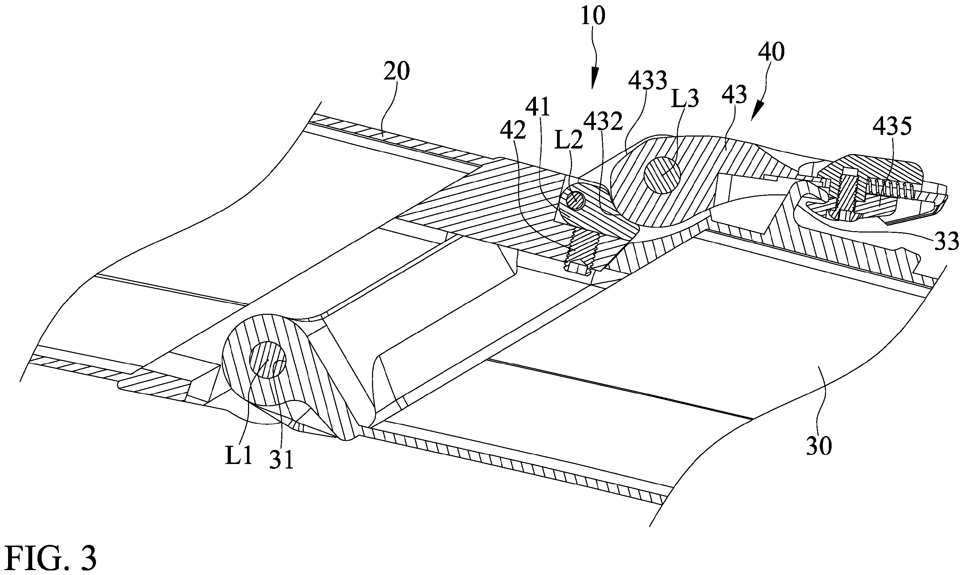

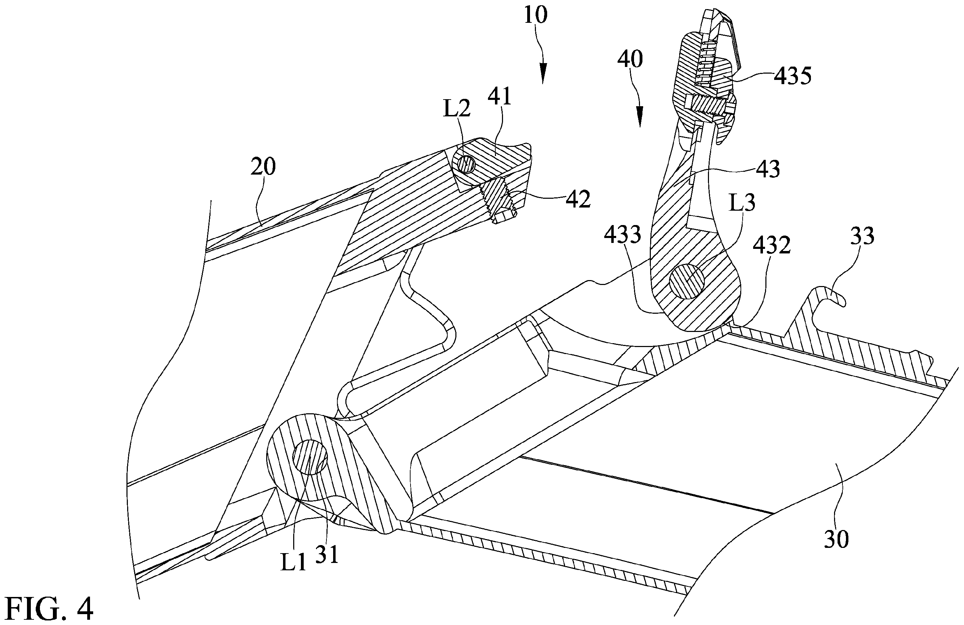

Figs. 1 through 4 show a folding structure for a bicycle according to a first embodiment of the present invention.

A first body 20 and a second body 30 pivotally connected to the first body 20 by a first fastening device. The first and second bodies 20 and 30 constitute a top tube of a frame of the bicycle. The first body 20 has a first connecting end 21. The second body 30 has a second connecting end 31. The first connecting end 21 is pivotally connected to the second connecting end 31. The first connecting end 21 has a hole. The second connecting end 31 has a hole. The first fastening device inserts in the holes of the first and second connecting ends 21 and 31. The first and second bodies 20 and 30 are pivotal about the first fastening device. An axis L1 extends through the center of the first fastening device. The first and second bodies 20 and 30 have respective first and second sides. The first and second bodies 20 and 30 include the first sides pivotally connected to one another.

A locking device 40 is disposed on the second sides of the first and second bodies 20 and 30. The locking device 40 includes a restraining member 41 pivotally connected to the first body 20 by a second fastening device and position adjustable and angle adjustable with respect to the first body 20. The first body 20 has a third connecting end 22. The restraining member 41 is disposed on the third connecting end 22. The restraining member 41 has an orifice extending therein. The second fastening device inserts in the orifice and is retained on the first body 20. An axis L2 extends through the center of the second fastening device. The axes L1 and L2 are parallel to one another.

The locking device 40 also includes a locking actuator 43 movably connected to the second body 30. The second body 30 has a fourth connecting end 32. The locking actuator 43 is disposed on the fourth connecting end 32. The locking actuator 43 is pivotally connected to the second body 30 by a third fastening device and is pivotal about an axis L3. The locking actuator 43 has an orifice extending therein. The third fastening device inserts through the orifice and is retained on the second body 30. The axis L3 extends through the center of the third fastening device. The axis L3 is parallel to the axes L1 and L2. The locking actuator 43 has an abutting end 431 in the form of a cam. The cam includes a first cam surface 432 at a first radial distance from the axis L3 and a second cam surface 433 at a second radial distance from the axis L3. The first radial distance is greater than the second radial distance.

An adjuster 42 is movably mounted on one of the restraining member 41 and the first body 20. The restraining member 41 is moved and changes its relative position and relative angle with respect to the first body 20 in response to the adjustment of the adjuster 42. The adjuster 42 includes outer threads. The first body 20 has an aperture with inner threads. The adjuster 42 is movably mounted on the first body 20 and is in thread engagement with the inner threads of the aperture. The adjuster 42 can be adjusted to extend out of the first body 20 and encounters the restraining member 41. The adjuster 42 is disposed underneath the restraining member 41.

The first and second bodies 20 and 30 have a first relative position in which the restraining member 41 and the locking actuator 43 are disposed in contact with one another and a second relative position in which the restraining member 41 and the locking actuator 43 are disposed apart from one another. The locking device 40 is adapted to lock the first body 20 to the second body 30 when the first and second bodies 20 and 30 are disposed in the first relative position. The locking actuator 43 is operable to a first position selectively locking first body 20 to the second body 30 and a second position unlocking the first and second bodies 20 and 30. The first cam surface 432 and the restraining member 41 are disposed in tight frictional contact with one another when the locking actuator 43 is disposed in the first position. The first cam surface 432 and the restraining member 41 are disposed apart from one another when the locking actuator 43 is disposed in the second position. The first body 20 is locked to the second body 30 and is restrained from pivoting by the cooperation of the locking actuator 43 and the restraining member 41, with the locking actuator 43 tightly engaged against the restraining member 41.

The locking actuator 43 disposed in the first position is adapted to be restrained by a holding member 33. The holding member 33 is disposed on the second body 30. The locking actuator 43 is operable from the first position to the second position or vice versa if it is not restrained by the holding member 33. The holding member 33 is disposed on the fourth connecting end 32. The holding member 33 is fixed.

Another holding member 435 is adapted to couple to the holding member 33. The locking actuator 43 includes an engaging end 434 and the holding member 33 engages the engaging end 434 to restrain the locking actuator 43. Another holding member 435 is disposed on the engaging end 434. One of the holding members 33 and 435 is movable to a first position coupling to the other of the holding members 33 and 435 and a second position disengaging from the other of the holding members 33 and 435. Another holding member 435 is movably mounted on the locking actuator 43. Another holding member 435 is slidably mounted on the locking actuator 43. The holding member 33 includes a first hook. Another holding member 435 includes a second hook. When the locking actuator 43 is restrained, the first and second hooks are coupled with one another. Furthermore, one of the holding members 33 and 435 is engaged with and biased by a resilient member.

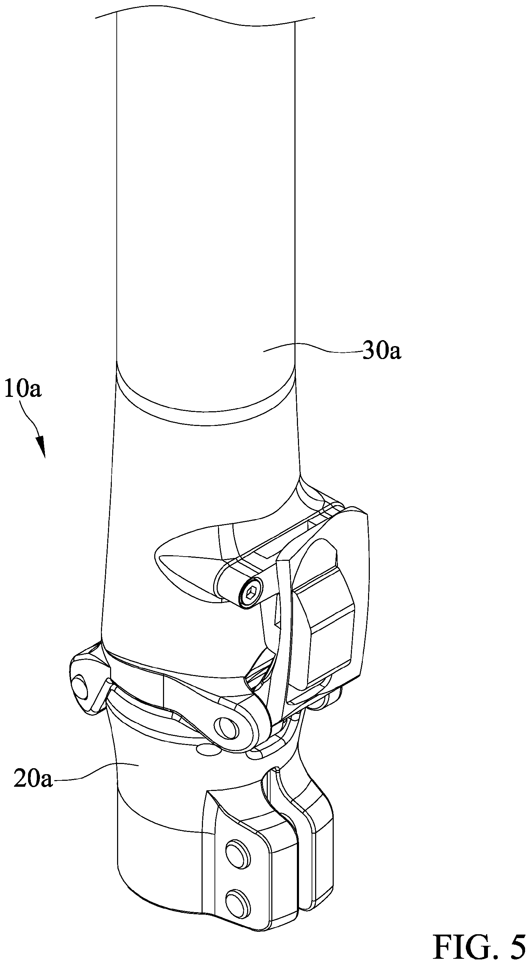

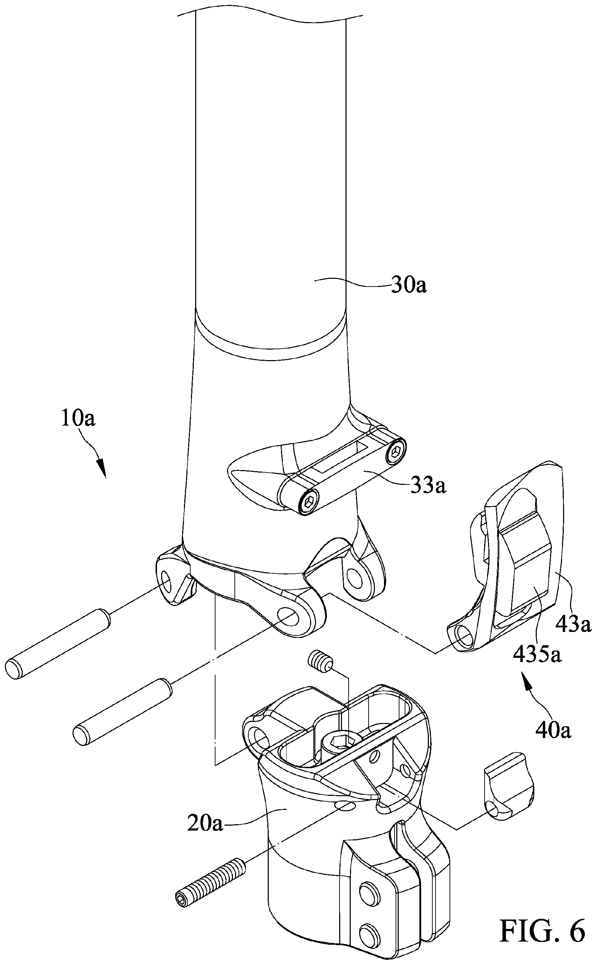

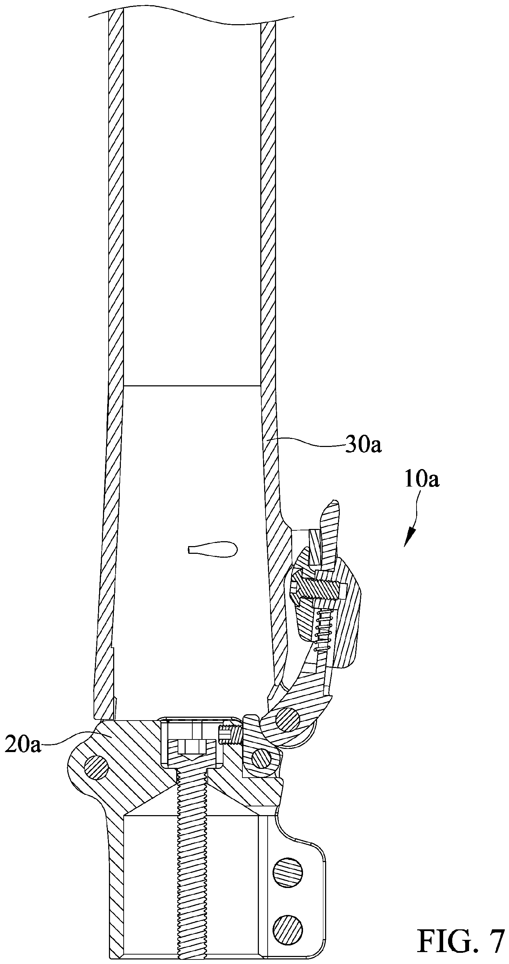

Figs. 5 through 7 show a folding structure 10a for a bicycle according to a second embodiment of the present invention, and the same numbers are used to correlate similar components of the first embodiment, but bearing a letter a. The second embodiment includes a first body 20a, a second body 30a pivotally connected to the first body 20, and a locking device 40a adapted to lock the first body 20 to the second body 30. A locking actuator 43a is adapted to be restrained by a holding member 33a. Another holding member 435a is movably mounted on the locking actuator 43a. Another holding member 435a is slidably mounted on the locking actuator 43a.

The second embodiment differentiates from the first embodiment in that the first and second bodies 20a and 30a constitute a head tube of a frame of the bicycle. Furthermore, the holding member 33a includes a slot, and another holding member 435a includes a hook. When the locking actuator 43a is restrained, the hook is engaged in the slot.

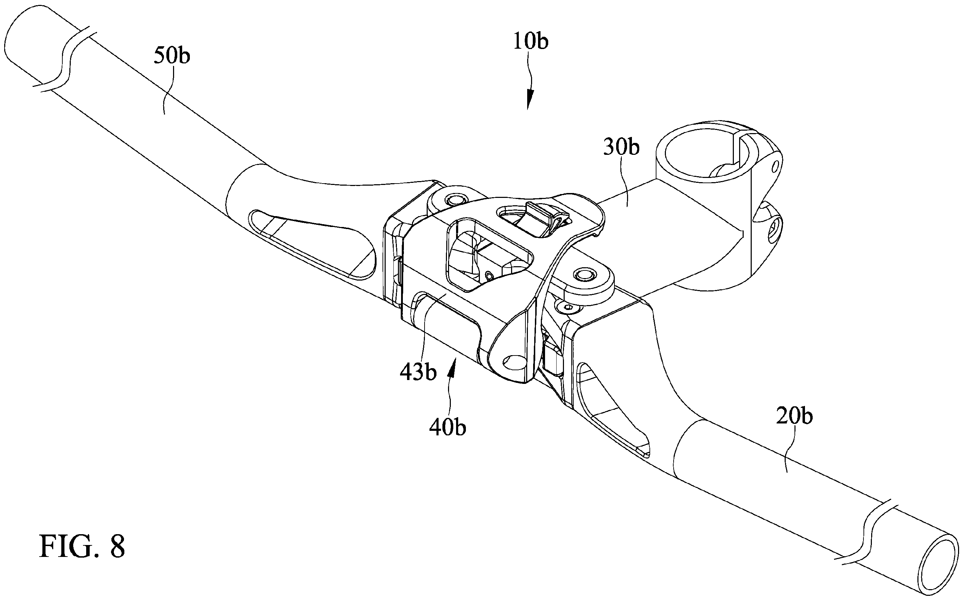

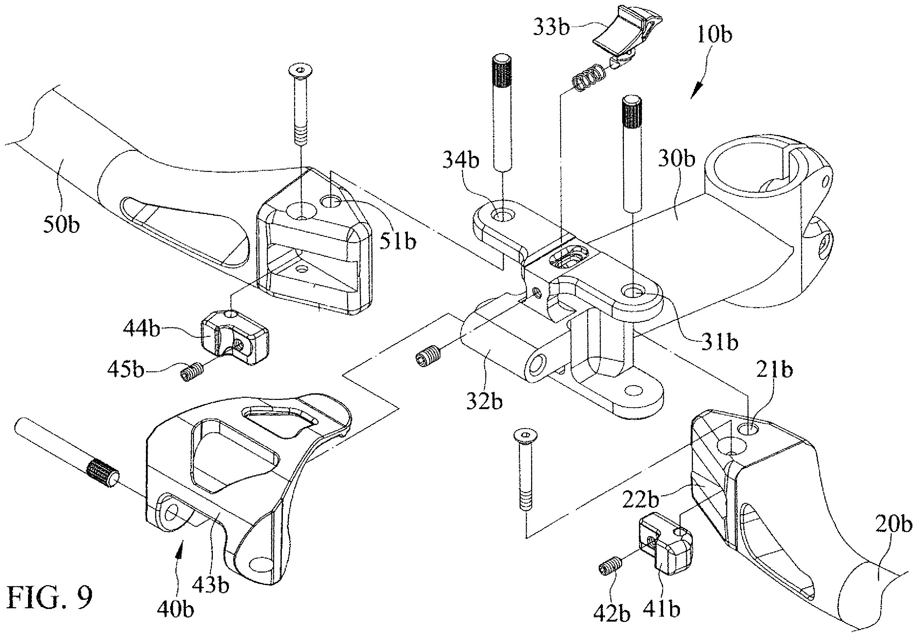

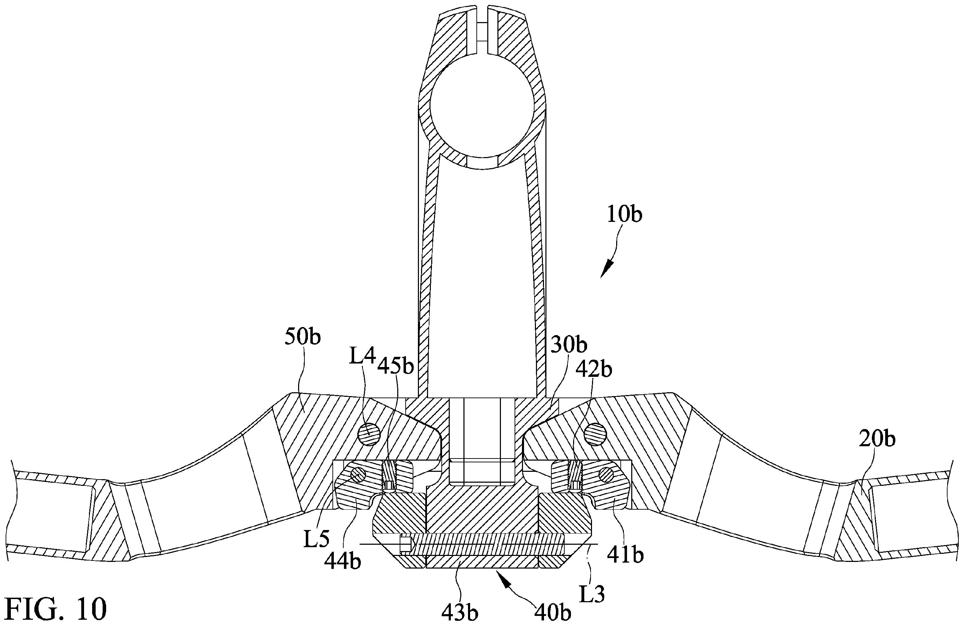

Figs. 8 through 10 show a folding structure for a bicycle according to a third embodiment of the present invention, and the same numbers are used to correlate similar components of the first embodiment, but bearing a letter b. The third embodiment includes a first body 20b, a second body 30b pivotally connected to the first body 20b, and a locking device 40b adapted to lock the first body 20b to the second body 30b. The first body 20b has a first connecting end 21b. The second body 30b has a second connecting end 31b. The first connecting end 21b is pivotally connected to the second connecting end 31b. Furthermore, the first body 20b and the second body 30b respectively have a third connecting end 22b and a fourth connecting end 32b. The locking device 40b includes a restraining member 41b disposed on the third connecting end 22b and a locking actuator 43b disposed on the fourth connecting end 32b. An adjuster 42b is movably mounted on one of the restraining member 41b and the first body 20b. The restraining member 41b is moved and changes its relative position and relative angle with respect to the first body 20b in response to the adjustment of the adjuster 42b.

The third embodiment differentiates from the first embodiment in that it further includes a third body 50b. The first and third bodies 20b and 50b constitute two handle bars of the bicycle. The third body 50b is pivotally connected to the second body 30b. The locking device 40b includes another restraining member 44b pivotally connected to the third body 50b and position adjustable and angle adjustable with respect to the third body 50b. The third body 50b has a fifth connecting end 51b. The second body 30b has a sixth connecting end 34b. The fifth connecting end 51b is pivotally connected to the sixth connecting end 34b. The fifth connecting end 51b has a hole. The sixth connecting end 34b has a hole. A fastening device inserts in the holes of fifth and sixth connecting ends 51b and 34b. The third and second bodies 50b and 30b are pivotal about the fastening device. An axis L4 extends through the center of the fastening device. In contrast to the direction of axis L3, which extends in a horizontal direction, the axis L4 extends in a vertical direction. Another restraining member 44b has an orifice extending therein. Another fastening device inserts in the orifice and is retained on the third body 50b. An axis L5 extends through the center of the fifth fastening device. The axes L4 and L5 are parallel to one another.

The locking device 40b is configured to selectively lock the third body 50b to the second body 30b. The first body 20b is independent of the third body 50b. The first and third bodies 20b and 50b are adapted to be locked to the second body 30b simultaneously or individually. The locking device 40b is adapted to lock the third body 50b to the second body 30b when the second and third bodies 30b and 50b are disposed in a first relative position in which the locking actuator 43b and another restraining member 44b are disposed in contact with one another. The locking actuator 43b is operable to a first position selectively locking third body 50b to the second body 30b and a second position unlocking the second and third bodies 30b and 50b. The third body 50b is locked to the second body 30b and is restrained from pivoting by the cooperation of the locking actuator 43b and another restraining member 44b, with the locking actuator 43b tightly engaged against another restraining member 44b.

Another adjuster 45b is movably mounted on one of another restraining member 44b and the third body 50b. Another restraining member 44b is moved and changes its relative position and relative angle with respect to the third body 50b in response to the adjustment of the adjuster 45b. The adjuster 45b includes outer threads. Another restraining member 44b has an aperture with inner threads. The adjuster 45b is movably mounted on another restraining member 44b and is in thread engagement with the inner threads of the aperture. The adjuster 45b can be adjusted to extend out of another restraining member 44b and encounters the third body 50b.

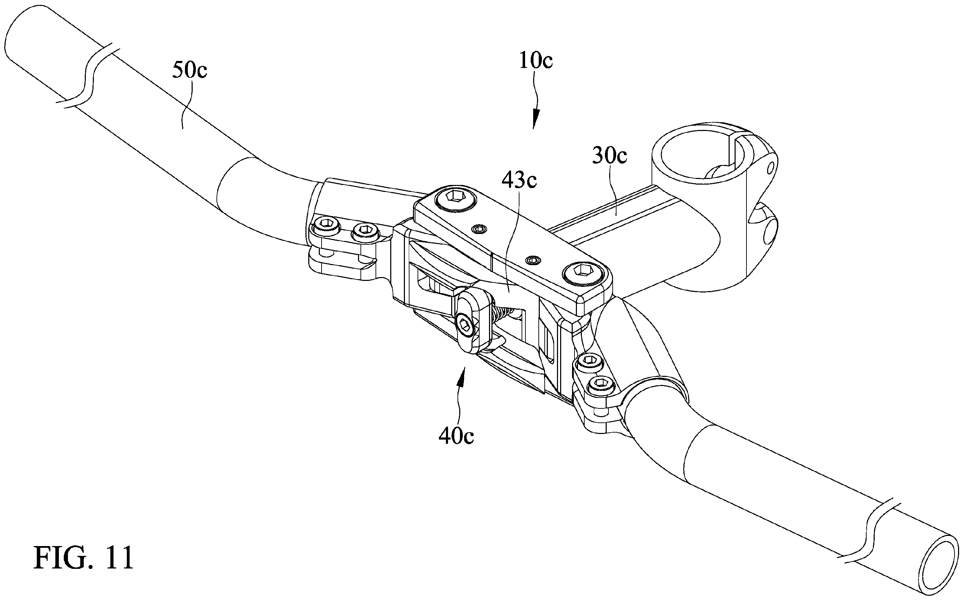

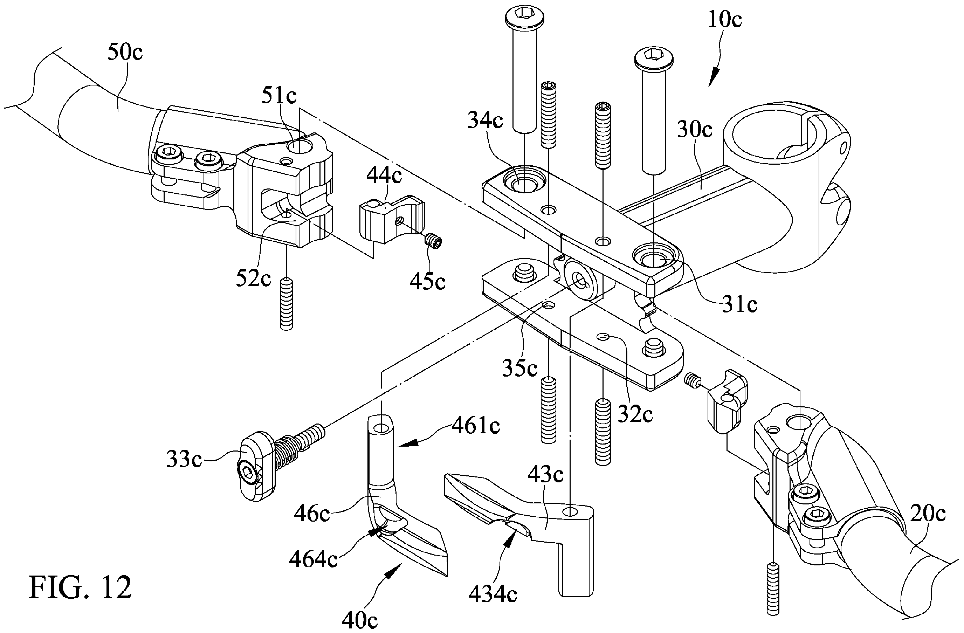

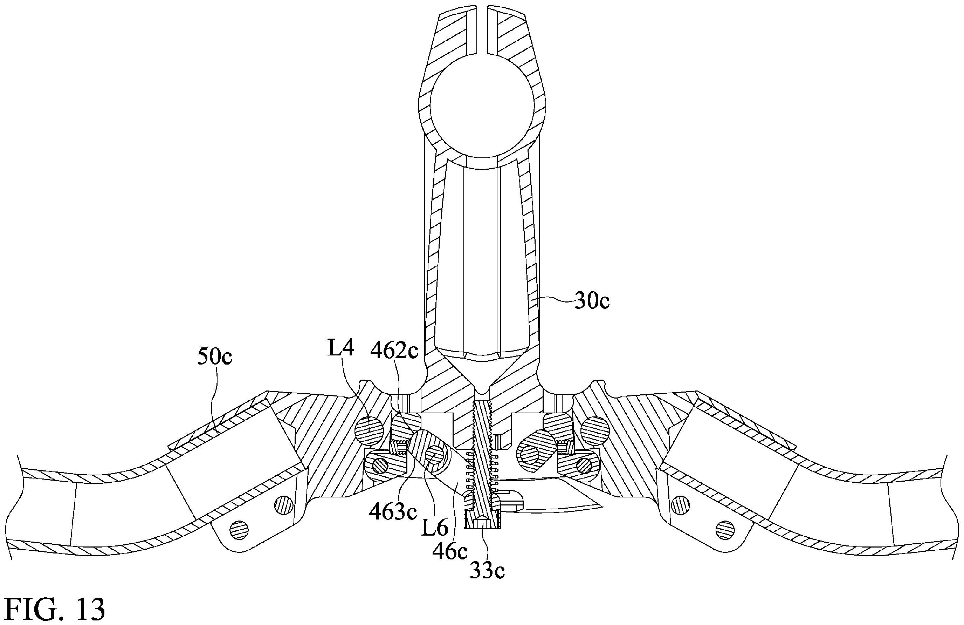

Figs. 11 through 13 show a folding structure 10c for a bicycle according to a fourth embodiment of the present invention, and the same numbers are used to correlate similar components of the first embodiment, but bearing a letter c. The fourth embodiment includes a first body 20c, a second body 30c pivotally connected to the first body 20c, a third body 50c pivotally connected the second body 30c, and a locking device 40c adapted to selectively lock the first and third bodies 20c and 50c. The first and third bodies 20c and 50c constitute two handle bars of the bicycle. The first body 20c is independent of the third body 50c. The first and third bodies 20c and 50c are adapted to be locked to the second body 30c simultaneously or individually. The second body 30c has a second connecting end 31c pivotally connected to the first body 20c. The second body 30c a fourth connecting end 32c. The locking device 40c includes a restraining member disposed on the first body 20c and a locking actuator 43c disposed on the fourth connecting end 32c. Furthermore, the second body has a sixth connecting end 34c. The third body 50c has a fifth connecting end 51c pivotally connected to the sixth connecting end 34c. The fifth connecting end 51c has a hole. The sixth connecting end 34c has a hole. A fastening device inserts in the holes of the fifth and sixth connecting ends 51c and 34c. The third and second bodies 50c and 30c are pivotal about the fastening device. The third body 50c has a seventh connecting end 52c. The second body 30c has an eighth connecting end 35c. Another restraining member 44c is disposed on the seventh connecting end 52c.

Another adjuster 45c is movably mounted on one of another restraining member 44c and the third body 50b. Another restraining member 44c is moved and changes its relative position and relative angle with respect to the third body 50c in response to the adjustment of the adjuster 45c. The adjuster 45c includes outer threads. Another restraining member 44c has an aperture with inner threads. The adjuster 45c is movably mounted on another restraining member 44c and is in thread engagement with the inner threads of the aperture. The adjuster 45c can be adjusted to extend out of another restraining member 44c and encounters the third body 50c.

The fourth embodiment differentiates from the third embodiment in that the locking device 40c further includes another locking actuator 46c movably connected to the second body 30c. Another locking actuator 46c is disposed on the eighth connecting end 35c. The locking device 40c is adapted to lock the third body 50c to the second body 30c when the second and third bodies 30c and 50c are disposed in a first relative position in which another locking actuator 46c and another restraining member 44c are disposed in contact with one another. Another locking actuator 46c is operable to a first position selectively locking third body 50c to the second body 30c and a second position unlocking the second and third bodies 30c and 50c. The third body 50c is locked to the second body 30c and is restrained from pivoting by the cooperation of another locking actuator 46c and another restraining member 44c, with another locking actuator 46c tightly engaged against another restraining member 44c. Another locking actuator 46c is pivotally connected to the second body 30c by another fastening device and is pivotal about an axis L6. Another locking actuator 46c has an orifice extending therein. Another fastening device inserts in the orifice and is retained on the third body 50c. The axis L6 extends through the center of the sixth fastening device. The axes L4 and L6 are parallel to one another. Another locking actuator 46c has an abutting end 461c in the form of a cam. The cam includes a first cam surface 462c at a first radial distance from the axis L6 and a second cam surface 463c at a second radial distance from the axis L6. The first radial distance is greater than the second radial distance. The first cam surface 462c and another restraining member 44c are disposed in tight frictional contact with one another when another locking actuator 46c is disposed in the first position. The first cam surface 462c and another restraining member 44c are disposed apart from one another when another locking actuator 46c is disposed in the second position.

The locking actuator 43c disposed in the first position is adapted to be restrained by a holding member 33c. Another locking actuator 46c disposed in the first position is adapted to be restrained by the holding member 33c. The locking actuator 43c and another locking actuator 46c are adapted to be held by the holding member 33c individually or simultaneously. The holding member 33c is disposed on the second body 30c. The locking actuator 43c includes an engaging end 434c and the holding member 33c engages the engaging end 434c to restrain the locking actuator 43. Another locking actuator 46c includes another engaging end 464c and the holding member 33c engages another engaging end 464c to restrain another locking actuator 46c. The holding member 33c is operable to a first position selectively restraining the locking actuator 43c and another locking actuator 46c individually or simultaneously and a second position disengaging from the engaging end 434c and another engaging end 464c. The holding member 33c is disposed between the fourth connecting end 32c and the eighth connecting end 35c. The engaging end 434c and another engaging end 464c each define a recessed area on respective locking actuators 43c and 46c. The holding member 33c is rotatably mounted on the second body 30c. The second body includes a hole. The hole has inner threads. The holding member 33c includes a body inserting in the hole. The body has outer threads in thread engagement with the inner threads of the hole. The holding member 33c is engaged with and biased by a resilient member. The resilient member is retained between a head of the holding member 33c and the second body 30c. The head is greater than the size of the hole and is disposed outside the hole. The head allows a user to grasp to operate the holding member 33c.

In view of the forgoing, the restraining members 41, 41b, 44b, 44c are position adjustable and angle adjustable, so the locking actuator 43, 43a, 43b, and 43c can always attain a tightly engagement against the respective restraining members 41, 41b, 44b, and 44c. Consequently, the locking devices 40, 40a, 40b, and 40c can lock the respective first body 20, 20a, 20b, and 20c to the second body 30, 30a, 30b, and 30c securely.

## Claims

1. A folding structure (10, 10a, 10b, 10c) for a bicycle, comprising:
a first body (20, 20a, 20b, 20c);
a second body (30, 30a, 30b, 30c) pivotally connected to the first body (20, 20a, 20b, 20c); and
a locking device (40, 40a, 40b, 40c) including a restraining member (41, 41b) pivotally connected to the first body (20, 20a, 20b, 20c) and position adjustable and angle adjustable with respect to the first body (20, 20a, 20b, 20c), and including a locking actuator (43, 43a, 43b, 43c) movably connected to the second body (30, 30a, 30b, 30c);
wherein the first and second bodies (20, 20a, 20b, 20c, 30, 30a, 30b, 30c) have a first relative position in which the restraining member (41, 41b) and the locking actuator (43, 43a, 43b, 43c) are disposed in contact with one another and a second relative position in which the restraining member (41, 41b) and the locking actuator (43, 43a, 43b, 43c) are disposed apart from one another; and
wherein the locking device (40, 40a, 40b, 40c) is adapted to lock the first body (20, 20a, 20b, 20c) to the second body (30, 30a, 30b, 30c) when the first and second bodies (20, 20a, 20b, 20c, 30, 30a, 30b, 30c) are disposed in the first relative position; and
wherein the locking actuator (43, 43a, 43b, 43c) is operable to a first position selectively locking the first body (20, 20a, 20b, 20c) to the second body (30, 30a, 30b, 30c) and a second position unlocking the first and second bodies (20, 20a, 20b, 20c, 30, 30a, 30b, 30c); and
wherein the first body (20, 20a, 20b, 20c) is locked to the second body (30, 30a, 30b, 30c) and is restrained from pivoting by the cooperation of the locking actuator (43, 43a, 43b, 43c) and the restraining member (41, 41b), with the locking actuator (43, 43a, 43b, 43c) tightly engaged against the restraining member (41, 41b); and
wherein the locking actuator (43, 43a, 43b, 43c) is pivotally connected to the second body (30, 30a, 30b, 30c) and is pivotal about an axis (L3), wherein the locking actuator (43, 43a, 43b, 43c) has an abutting end (431) in the form of a cam, wherein the cam includes a first cam surface (432) at a first radial distance from the axis (L3) and a second cam surface (433) at a second radial distance from the axis (L3), wherein the first radial distance is greater than the second radial distance, wherein the first cam surface (432) and the restraining member (41, 41b) are disposed in tight frictional contact with one another when the locking actuator (43, 43a, 43b, 43c) is disposed in the first position, and wherein the first cam surface (432) and the restraining member (41, 41b) are disposed apart from one another when the locking actuator (43, 43a, 43b, 43c) is disposed in the second position;
**characterized in that**
the locking actuator (43, 43a, 43b, 43c) disposed in the first position is adapted to be restrained by a holding member (33, 33a, 33b, 33c), and wherein the holding member (33, 33a, 33b, 33c) is disposed on the second body (30, 30a, 30b, 30c).

2. The folding structure (10, 10a, 10b, 10c) for the bicycle as claimed in claim 1 further comprising an adjuster (42, 42b) movably mounted on one of the restraining member (41, 41b) and the first body (20, 20a, 20b, 20c), and wherein the restraining member (41, 41b) is moved and changes its relative position and relative angle with respect to the first body (20, 20a, 20b, 20c) in response to the adjustment of the adjuster (42, 42b).

3. The folding structure (10, 10a, 10b) for the bicycle as claimed in claim 1 further comprising another holding member (435) adapted to couple to the holding member (33, 33a, 33b), wherein the locking actuator (43, 43a, 43b) includes an engaging end (434) and the holding member (33, 33a, 33b) engages the engaging end (434) to restrain the locking actuator (43, 43a, 43b), wherein the other holding member (435) is disposed on the engaging end (434), and wherein one of the holding members (33, 33a, 33b, 435) is movable to a first position coupling to the other of the holding members (33, 33a, 33b, 435) and a second position disengaging from the other of the holding members (33, 33a, 33b, 435).

4. The folding structure (10) for the bicycle as claimed in claim 3, wherein the one of the holding members (33, 33a, 33b, 435) is engaged with and biased by a resilient member.

5. The folding structure (10) for the bicycle as claimed in claim 1, wherein the first and second bodies (20, 30) constitute a top tube of a frame of the bicycle.

6. The folding structure (10a) for the bicycle as claimed in claim 1, wherein the first and second bodies (20a, 30a) constitute a head tube of a frame of the bicycle.

7. The folding structure (10b, 10c) for the bicycle as claimed in claim 1 further comprising a third body (50b, 50c) pivotally connected to the second body (30b, 30c), wherein the locking device (40b, 40c) includes another restraining member (44b, 44c) pivotally connected to the third body (50b, 50c) and position adjustable and angle adjustable with respect to the third body (50b, 50c), and wherein the locking device (40b, 40c) is adapted to lock the third body (50b, 50c) to the second body (30b, 30c), wherein the locking device (40b, 40c) is configured to selectively lock the third body (50b, 50c) to the second body (30b, 30c).

8. The folding structure (10b) for the bicycle as claimed in claim 7, wherein the locking device (40b) is adapted to lock the third body (50b) to the second body (30b) when the second and third bodies (30b, 50b) are disposed in a first relative position in which the locking actuator (43b) and the other restraining member (44b) are disposed in contact with one another, wherein the locking actuator (43b) is operable to a first position selectively locking the third body (50b) to the second body (30b) and a second position unlocking the second and third bodies (30b, 50b), and wherein the third body (50b) is locked to the second body (30b) and is restrained from pivoting by the cooperation of the locking actuator (43b) and the other restraining member (44b), with the locking actuator (43b) tightly engaged against the other restraining member (44b).

9. The folding structure (10c) for the bicycle as claimed in claim 7, wherein the locking device (40c) includes another locking actuator (46c) movably connected to the second body (30c), wherein the locking device (40c) is adapted to lock the third body (50c) to the second body (30c) when the second and third bodies (30c, 50c) are disposed in a first relative position in which the other locking actuator (46c) and the other restraining member (44c) are disposed in contact with one another, wherein the other locking actuator (46c) is operable to a first position selectively locking the third body (50c) to the second body (30c) and a second position unlocking the second and third bodies (30c, 50c), and wherein the third body (50c) is locked to the second body (30c) and is restrained from pivoting by the cooperation of the other locking actuator (46c) and the other restraining member (44c), with the other locking actuator (46c) tightly engaged against the other restraining member (44c).

10. The folding structure (10b, 10c) for the bicycle as claimed in claim 7, wherein the first and third bodies (20b, 20c, 50b, 50c) constitute two handle bars of the bicycle.

11. The folding structure (10b, 10c) for the bicycle as claimed in claim 7 further comprising another adjuster (45b, 45c) movably mounted on one of the other restraining member (44b, 44c) and the third body (50b, 50c), and wherein the other restraining member (44b, 44c) is moved and changes its relative position and relative angle with respect to the third body (50b, 50c) in response to the adjustment of the other adjuster (45b, 45c).

12. The folding structure (10c) for the bicycle as claimed in claim 9, wherein the other locking actuator (46c) is pivotally connected to the second body (30c) and is pivotal about an axis (L6), wherein the other locking actuator (46c) has an abutting end (461c) in the form of a cam, wherein the cam includes a first cam surface (462c) at a first radial distance from the axis (L6) and a second cam surface (463c) at a second radial distance from the axis (L6), wherein the first radial distance is greater than the second radial distance, wherein the first cam surface (462c) and the other restraining member (44c) are disposed in tight frictional contact with one another when the other locking actuator (46c) is disposed in the first position, and wherein the first cam surface (462c) and the other restraining member (44c) are disposed apart from one another when the other locking actuator (46c) is disposed in the second position.

13. The folding structure (10c) for the bicycle as claimed in claim 9, wherein the other locking actuator (46c) disposed in the first position is adapted to be restrained by the holding member (33c), wherein the locking actuator (43c) and the other locking actuator (46c) are adapted to be held by the holding member (33c) individually or simultaneously, wherein the locking actuator (43c) includes an engaging end (434c) and the holding member (33c) engages the engaging end (434c) to restrain the locking actuator (43), wherein the other locking actuator (46c) includes another engaging end (464c) and the holding member (33c) engages the other engaging end (464c) to restrain the other locking actuator (46c), wherein the holding member (33c) is operable to a first position selectively restraining the locking actuator (43c) and the other locking actuator (46c) individually or simultaneously and a second position disengaging from the engaging end (434c) and from the other engaging end (464c), wherein the holding member (33c) is rotatably mounted on the second body (30c), and wherein the holding member (33c) is engaged with and biased by a resilient member.

## Patentansprüche

1. Klappstruktur (10, 10a, 10b, 10c) für ein Fahrrad, mit:
einem ersten Körper (20, 20a, 20b, 20c);
einem zweiten Körper (30, 30a, 30b, 30c), der schwenkbar mit dem ersten Körper (20, 20a, 20b, 20c) verbunden ist; und
einer Verriegelungseinrichtung (40, 40a, 40b, 40c) mit einem Rückhalteelement (41, 41b), die schwenkbar mit dem ersten Körper (20, 20a, 20b, 20c) verbunden ist und bezüglich des ersten Körpers (20, 20a, 20b, 20c) in der Position und im Winkel verstellbar ist, und mit einem Verriegelungsaktuator (43, 43a, 43b, 43c), der beweglich mit dem zweiten Körper (30, 30a, 30b, 30c) verbunden ist,
wobei der erste und der zweite Körper (20, 20a, 20b, 20c, 30, 30a, 30b, 30c) eine erste Relativposition aufweisen, in der das Rückhalteelement (41, 41b) und der Verriegelungsaktuator (43, 43a, 43b, 43c) in Kontakt miteinander angeordnet sind, und eine zweite Relativposition, in der das Rückhalteelement (41, 41b) und der Verriegelungsaktuator (43, 43a, 43b, 43c) voneinander beabstandet sind, und
wobei die Verriegelungseinrichtung (40, 40a, 40b, 40c) dazu eingerichtet ist, den ersten Körper (20, 20a, 20b, 20c) am zweiten Körper (30, 30a, 30b, 30c) zu verriegeln, wenn der erste und der zweite Körper (20, 20a, 20b, 20c, 30, 30a, 30b, 30c) in der ersten Relativposition angeordnet sind, und
wobei der Verriegelungsaktuator (43, 43a, 43b, 43c) in eine erste Position betätigbar ist, in der der erste Körper (20, 20a, 20b, 20c) am zweiten Körper (30, 30a, 30b, 30c) selektiv verriegelt ist, und in eine zweite Position, in der der erste und der zweite Körper (20, 20a, 20b, 20c, 30, 30a, 30b), 30c) entriegelt sind, und
wobei durch Zusammenwirken des Verriegelungsaktuators (43, 43a, 43b, 43c) und des Rückhalteelements (41, 41b), wobei der Verriegelungsaktuator (43, 43a, 43b, 43c) enganliegend mit dem Rückhalteelement (41, 41b) in Eingriff steht, der erste Körper (20, 20a, 20b, 20c) am zweiten Körper (30, 30a, 30b, 30c) verriegelt ist und eine Schwenkbewegung des ersten Körpers verhindert wird, und
wobei der Verriegelungsaktuator (43, 43a, 43b, 43c) schwenkbar mit dem zweiten Körper (30, 30a, 30b, 30c) verbunden und um eine Achse (L3) schwenkbar ist, wobei der Verriegelungsaktuator (43, 43a, 43b, 43c) ein Anlageende (431) in Form einer Nocke aufweist, wobei die Nocke eine erste Nockenfläche (432) in einem ersten radialen Abstand von der Achse (L3) und eine zweite Nockenfläche (433) in einem zweiten radialen Abstand von der Achse (L3) aufweist, wobei der erste radiale Abstand größer ist als der zweite radiale Abstand, wobei die erste Nockenfläche (432) und das Rückhalteelement (41, 41b) in engem Reibkontakt miteinander angeordnet sind, wenn sich der Verriegelungsaktuator (43, 43a, 43b, 43c) in der ersten Position befindet, und wobei die erste Nockenfläche (432) und das Rückhalteelement (41, 41b) voneinander beabstandet sind, wenn der Verriegelungsaktuator (43, 43a, 43b, 43c) sich in der zweiten Position befindet, und
wobei der in der ersten Position angeordnete Verriegelungsaktuator (43, 43a, 43b, 43c) dazu eingerichtet ist, durch ein Halteelement (33, 33a, 33b, 33c) gehalten zu werden, und wobei das Halteelement (33, 33a, 33b, 33c) am zweiten Körper (30, 30a, 30b, 30c) angeordnet ist.

2. Klappstruktur (10, 10a, 10b, 10c) nach Anspruch 1, ferner mit einer Einstelleinrichtung (42, 42b), die beweglich am Rückhalteelement (41, 41b) oder am ersten Körper (20, 20a, 20b, 20c) montiert ist, wobei das Rückhalteelement (41, 41b) in Antwort auf den Einstellvorgang der Einstelleinrichtung (42, 42b) bewegt wird und seine Relativposition und seinen relativen Winkel bezüglich des ersten Körpers (20, 20a, 20b, 20c) ändert.

3. Klappstruktur (10, 10a, 10b) nach Anspruch 1, ferner mit einem anderen Halteelement (435), das dazu eingerichtet ist, mit dem Halteelement (33, 33a, 33b) verbunden zu werden, wobei der Verriegelungsaktuator (43, 43a, 43b) ein Eingriffsende (434) aufweist und das Halteelement (33, 33a, 33b) mit dem Eingriffsende (434) in Eingriff kommt, um den Verriegelungsaktuator (43, 43a, 43b) zurückzuhalten, wobei ein anderes Halteelement (435) am Eingriffsende (434) angeordnet ist, und wobei eines der Halteelemente (33, 33a, 33b, 435) in eine erste Position bewegbar ist, in der es mit dem anderen der Halteelemente (33, 33a, 33b, 435) verbunden ist, und in eine zweite Position, in der es von dem anderen der Halteelemente (33, 33a, 33b, 435) außer Eingriff kommt.

4. Klappstruktur (10) nach Anspruch 3, wobei das eine der Halteelemente (33, 33a, 33b, 435) mit einem elastischen Element in Eingriff steht und durch dieses vorgespannt wird.

5. Klappstruktur (10) nach Anspruch 1, wobei der erste und der zweite Körper (20, 30) ein Oberrohr eines Rahmens des Fahrrads bilden.

6. Klappstruktur (10a) nach Anspruch 1, wobei der erste und der zweite Körper (20a, 30a) ein Steuerrohr eines Rahmens des Fahrrads bilden.

7. Klappstruktur (10b, 10c) nach Anspruch 1, ferner mit einem dritten Körper (50b, 50c), der schwenkbar mit dem zweiten Körper (30b, 30c) verbunden ist, wobei die Verriegelungseinrichtung (40b, 40c) ein anderes Rückhalteelement (44b, 44c) aufweist, das schwenkbar mit dem dritten Körper (50b, 50c) verbunden ist und in der Position und im Winkel bezüglich des dritten Körpers (50b, 50c) einstellbar ist, und wobei die Verriegelungseinrichtung (40b, 40c) dazu eingerichtet ist, den dritten Körper (50b, 50c) am zweiten Körper (30b, 30c) zu verriegeln, wobei die Verriegelungseinrichtung (40b, 40c) dafür konfiguriert ist, den dritten Körper (50b, 50c) selektiv am zweiten Körper (30b, 30c) zu verriegeln.

8. Klappstruktur (10b) nach Anspruch 7, wobei die Verriegelungseinrichtung (40b) dazu eingerichtet ist, den dritten Körper (50b) am zweiten Körper (30b) zu verriegeln, wenn der zweite und der dritte Körper (30b, 50b) in einer ersten Relativposition angeordnet sind, in der der Verriegelungsaktuator (43b) und ein anderes Rückhalteelement (44b) in Kontakt miteinander angeordnet sind, wobei der Verriegelungsaktuator (43b) in eine erste Position betätigbar ist, in der der dritte Körper (50b) selektiv am zweiten Körper (30b) verriegelt ist, und in eine zweite Position, in der der zweite und der dritte Körper (30b, 50b) entriegelt sind, und wobei durch das Zusammenwirken des Verriegelungsaktuators (43b) und des anderen Rückhalteelements (44b), wobei der Verriegelungsaktuator (43b) enganliegend mit dem anderen Rückhalteelement (44b) in Eingriff steht, der dritte Körper (50b) am zweiten Körper (30b) verriegelt ist und eine Schwenkbewegung des dritten Körpers verhindert wird.

9. Klappstruktur (10c) nach Anspruch 7, wobei die Verriegelungseinrichtung (40c) einen anderen Verriegelungsaktuator (46c) aufweist, der beweglich mit dem zweiten Körper (30c) verbunden ist, wobei die Verriegelungseinrichtung (40c) dazu eingerichtet ist, den dritten Körper (50c) am zweiten Körper (30c) zu verriegeln, wenn der zweite und der dritte Körper (30c, 50c) in einer ersten Relativposition angeordnet sind, in der der andere Verriegelungsaktuator (46c) und ein anderes Rückhalteelement (44c) in Kontakt miteinander angeordnet sind, wobei der andere Verriegelungsaktuator (46c) in eine erste Position betätigbar ist, in der der dritte Körper (50c) am zweiten Körper (30c) selektiv verriegelt ist, und in eine zweite Position, in der der zweite und der dritte Körper (30c, 50c) entriegelt sind, und wobei durch das Zusammenwirken des anderen Verriegelungsaktuators (46c) und des anderen Rückhalteelements (44c), wobei der andere Verriegelungsaktuator (46c) enganliegend mit dem anderen Rückhalteelement (44c) in Eingriff steht, der dritte Körper (50c) am zweiten Körper (30c) verriegelt und eine Schwenkbewegung des dritten Körpers verhindert wird.

10. Klappstruktur (10b, 10c) nach Anspruch 7, wobei der erste und der dritte Körper (20b, 20c, 50b, 50c) zwei Lenkstangen des Fahrrads bilden.

11. Klappstruktur (10b, 10c) nach Anspruch 7, ferner mit einer anderen Einstelleinrichtung (45b, 45c), die beweglich an einem anderen Rückhalteelement (44b, 44c) oder am dritten Körper (50b, 50c) montiert ist, wobei das andere Rückhalteelement (44b, 44c) in Antwort auf den Einstellvorgang der anderen Einstelleinrichtung (45b, 45c) bewegt wird und seine Relativposition und seinen relativen Winkel in Bezug auf den dritten Körper (50b, 50c) ändert.

12. Klappstruktur (10c) nach Anspruch 9, wobei der andere Verriegelungsaktuator (46c) schwenkbar mit dem zweiten Körper (30c) verbunden und um eine Achse (L6) schwenkbar ist, wobei der andere Verriegelungsaktuator (46c) ein Anlageende (461c) in der Form einer Nocke aufweist, wobei die Nocke eine erste Nockenfläche (462c) in einem ersten radialen Abstand von der Achse (L6) und eine zweite Nockenfläche (463c) in einem zweiten radialen Abstand von der Achse (L6) aufweist, wobei der erste radiale Abstand größer ist als der zweite radiale Abstand, wobei die erste Nockenfläche (462c) und ein anderes Rückhalteelement (44c) in engem Reibkontakt miteinander angeordnet sind, wenn sich der andere Verriegelungsaktuator (46c) in der ersten Position befindet, und wobei die erste Nockenfläche (462c) und ein anderes Rückhalteelement (44c) voneinander beabstandet sind, wenn der andere Verriegelungsaktuator (46c) sich in der zweiten Position befindet.

13. Klappstruktur (10c) nach Anspruch 9, wobei der in der ersten Position angeordnete Verriegelungsaktuator (43c) dazu eingerichtet ist, durch ein Halteelement (33c) gehalten zu werden, wobei der in der ersten Position angeordnete andere Verriegelungsaktuator (46c) dazu eingerichtet ist, durch das Halteelement (33c) gehalten zu werden, wobei der Verriegelungsaktuator (43c) und der andere Verriegelungsaktuator (46c) dazu eingerichtet sind, einzeln oder gleichzeitig durch das Halteelement (33c) gehalten zu werden, wobei das Halteelement (33c) am zweiten Körper (30c) angeordnet ist, wobei der Verriegelungsaktuator (43c) ein Eingriffsende (434c) aufweist und das Halteelement (33c) mit dem Eingriffsende (434c) in Eingriff steht, um den Verriegelungsaktuator (43) zurückzuhalten, wobei der andere Verriegelungsaktuator (46c) ein anderes Eingriffsende (464c) aufweist und das Halteelement (33c) mit dem anderen Eingriffsende (464c) in Eingriff steht, um den anderen Verriegelungsaktuator (46c) zurückzuhalten, wobei das Halteelement (33c) in eine erste Position betätigbar ist, in der der Verriegelungsaktuator (43c) und der andere Verriegelungsaktuator (46c) selektiv einzeln oder gleichzeitig zurückgehalten werden, und in eine zweite Position, in der das Halteelement (33c) von dem Eingriffsende (434c) und von dem anderen Eingriffsende (464c) außer Eingriff kommt, wobei das Halteelement (33c) drehbar am zweiten Körper (30c) montiert ist, und wobei das Halteelement (33c) mit einem elastischen Element in Eingriff steht und dadurch vorgespannt wird.

## Revendications

1. Structure pliante (10, 10a, 10b, 10c) pour une bicyclette comprenant :
un premier corps (20, 20a, 20b, 20c) ;
un deuxième corps (30, 30a, 30b, 30c) relié en pouvant pivoter au premier corps (20, 20a, 20b, 20c) ; et
un dispositif de verrouillage (40, 40a, 40b, 40c) comportant un élément de retenue (41, 41b) relié en pouvant pivoter au premier corps (20, 20a, 20b, 20c) et, ajustable en position et ajustable en angle par rapport au premier corps (20, 20a, 20b, 20c), et comportant un actionneur de verrouillage (43, 43a, 43b, 43c) relié de manière mobile au deuxième corps (30, 30a, 30b, 30c) ;
où les premier et deuxième corps (20, 20a, 20b, 20c, 30, 30a, 30b, 30c) possèdent une première position relative dans laquelle l'élément de retenue (41, 41b) et l'actionneur de verrouillage (43, 43a, 43b, 43c) sont disposés en contact l'un avec l'autre, et une deuxième position relative dans laquelle l'élément de retenue (41, 41b) et l'actionneur de verrouillage (43, 43a, 43b, 43c) sont disposés séparés l'un de l'autre ; et
où le dispositif de verrouillage (40, 40a, 40b, 40c) est adapté pour verrouiller le premier corps (20, 20a, 20b, 20c) au deuxième corps (30, 30a, 30b, 30c) lorsque les premier et deuxième corps (20, 20a, 20b, 20c, 30, 30a, 30b, 30c) sont disposés dans la première position relative ; et
où l'actionneur de verrouillage (43, 43a, 43b, 43c) peut être mis dans une première position verrouillant sélectivement un premier corps (20, 20a, 20b, 20c) au deuxième corps (30, 30a, 30b, 30c) et une deuxième position déverrouillant les premier et deuxième corps (20, 20a, 20b, 20c, 30, 30a, 30b, 30c) ; et
où le premier corps (20, 20a, 20b, 20c) est verrouillé au deuxième corps (30, 30a, 30b, 30c) et est retenu de pivoter par la coopération de l'actionneur de verrouillage (43, 43a, 43b, 43c) et l'élément de retenue (41, 41b), avec l'actionneur de verrouillage (43, 43a, 43b, 43c) engagé de manière serrée contre l'élément de retenue (41, 41b) ; et
où l'actionneur de verrouillage (43, 43a, 43b, 43c) est relié en pouvant pivoter au deuxième corps (30, 30a, 30b, 30c) et est pivotant autour d'un axe (L3), où l'actionneur de verrouillage (43, 43a, 43b, 43c) possède une extrémité contigüe (431) sous la forme d'une came, où la came comporte une première surface de came (432) à une première distance radiale par rapport à l'axe (L3) et une deuxième surface de came (433) à une deuxième distance radiale par rapport à l'axe (L3), où la première distance radiale est supérieure à la deuxième distance radiale, où la première surface de came (432) et l'élément de retenue (41, 41b) sont disposés en contact frictionnel serré l'un avec l'autre lorsque l'actionneur de verrouillage (43, 43a, 43b, 43c) est disposé dans la première position, et où la première surface de came (432) et l'élément de retenue (41, 41b) sont disposés séparés l'un de l'autre lorsque l'actionneur de verrouillage (43, 43a, 43b, 43c) est disposé dans la deuxième position ;
et
où l'actionneur de verrouillage (43, 43a, 43b, 43c) disposé dans la première position est adapté pour être retenu par un élément support (33, 33a, 33b, 33c) et où l'élément support (33, 33a, 33b, 33c) est disposé sur le deuxième corps (30, 30a, 30b, 30c).

2. Structure pliante (10, 10a, 10b, 10c) pour une bicyclette selon la revendication 1, comprenant en outre un dispositif de réglage (42, 42b) monté de manière mobile sur un élément parmi l'élément de retenue (41, 41b) et le premier corps (20, 20a, 20b, 20c), et où l'élément de retenue (41, 41b) est déplacé et change sa position relative et son angle relatif par rapport au premier corps (20, 20a, 20b, 20c) en réponse à l'ajustement du dispositif de réglage (42, 42b).

3. Structure pliante (10, 10a, 10b) pour une bicyclette selon la revendication 1, comprenant en outre un autre élément support (435) adapté pour s'accoupler à l'élément support (33, 33a, 33b), où l'actionneur de verrouillage (43, 43a, 43b) comporte une extrémité d'engagement (434) et l'élément support (33, 33a, 33b) s'engage dans l'extrémité d'engagement (434) pour retenir l'actionneur de verrouillage (43, 43a, 43b), où l'autre élément support (435) est disposé sur l'extrémité d'engagement (434), et où un des éléments supports (33, 33a, 33b, 435) est mobile vers une première position en se couplant aux autres éléments parmi les éléments supports (33, 33a, 33b, 435) et une deuxième position de désengagement des autres éléments parmi les éléments supports (33, 33a, 33b, 435).

4. Structure pliante (10) pour une bicyclette selon la revendication 3, dans laquelle l'un des éléments supports (33, 33a, 33b, 435) est engagé avec un élément élastique et est déformé par celui-ci.

5. Structure pliante (10) pour une bicyclette selon la revendication 1, dans laquelle les premier et deuxième corps (20, 30) constituent un tube supérieur d'un cadre de la bicyclette.

6. Structure pliante (10a) pour une bicyclette selon la revendication 1, dans laquelle les premier et deuxième corps (20a, 30a) constituent un tube avant d'un cadre de la bicyclette.

7. Structure pliante (10b, 10c) pour une bicyclette selon la revendication 1, comprenant en outre un troisième corps (50b, 50c) relié en pouvant pivoter au deuxième corps (30b, 30c), où le dispositif de verrouillage (40b, 40c) comporte un autre élément de retenue (44b, 44c) relié en pouvant pivoter au troisième corps (50b, 50c) et ajustable en position, et ajustable en angle par rapport au troisième corps (50b, 50c) et où le dispositif de verrouillage (40b, 40c) est adapté pour verrouiller le troisième corps (50b, 50c) au deuxième corps (30b, 30c), où le dispositif de verrouillage (40b, 40c) est conçu pour verrouiller sélectivement le troisième corps (50b, 50c) au deuxième corps (30b, 30c).

8. Structure pliante (10b) pour une bicyclette selon la revendication 7, dans laquelle le dispositif de verrouillage (40b) est adapté pour verrouiller le troisième corps (50b) au deuxième corps (30b) lorsque les deuxième et troisième corps (30b, 50b) sont disposés dans une première position relative dans laquelle l'actionneur de verrouillage (43b) et un autre élément de retenue (44b) sont disposés en contact l'un avec l'autre, où l'actionneur de verrouillage (43b) peut se mettre dans une première position verrouillant sélectivement le troisième corps (50b) au deuxième corps (30b) et une deuxième position déverrouillant les deuxième et troisième corps (30b, 50b), et où le troisième corps (50b) est verrouillé au deuxième corps (30b) et est retenu de pivoter par la coopération de l'actionneur de verrouillage (43b) et de l'autre élément de retenue (44b) avec l'actionneur de verrouillage (43b) engagé de manière serrée contre l'autre élément de retenue (44b).

9. Structure pliante (10c) pour une bicyclette selon la revendication 7, dans laquelle le dispositif de verrouillage (40c) comporte un autre actionneur de verrouillage (46c) relié en étant mobile au deuxième corps (30c), où le dispositif de verrouillage (40c) est adapté pour verrouiller le troisième corps (50c) au deuxième corps (30c) lorsque les deuxième et troisième corps (30c, 50c) sont disposés dans une première position relative dans laquelle l'autre actionneur de verrouillage (46c) et l'autre élément de retenue (44c) sont disposés en contact l'un avec l'autre, où l'autre actionneur de verrouillage (46c) peut être mis dans une première position verrouillant sélectivement le troisième corps (50c) au deuxième corps (30c) et une deuxième position déverrouillant les deuxième et troisième corps (30c, 50c), et où le troisième corps (50c) est verrouillé au deuxième corps (30c) et est retenu de pivoter par la coopération de l'autre actionneur de verrouillage (46c) et de l'autre élément de retenue (44c) avec l'autre actionneur de verrouillage (46c) engagé de manière serrée contre l'autre élément de retenue (44c).

10. Structure pliante (10b, 10c) pour une bicyclette selon la revendication 7, dans laquelle les premier et troisième corps (20b, 20c, 50b, 50c) constituent deux barres de guidon de la bicyclette.

11. Structure pliante (10b, 10c) pour une bicyclette selon la revendication 7, comprenant en outre un autre dispositif de réglage (45b, 45c) monté en étant mobile sur un élément parmi un autre élément de retenue (44b, 44c) et le troisième corps (50b, 50c), et où l'autre élément de retenue (44b, 44c) est déplacé et change sa position relative et son angle relatif par rapport au troisième corps (50b, 50c) en réponse à l'ajustement de l'autre dispositif de réglage (45b, 45c).

12. Structure pliante (10c) pour une bicyclette selon la revendication 9, dans laquelle l'autre actionneur de verrouillage (46c) est relié en pouvant pivoter au deuxième corps (30c) et est pivotant autour d'un axe (L6), où l'autre actionneur de verrouillage (46c) possède une extrémité contigüe (461c) sous la forme d'une came, où la came comporte une première surface de came (432c) à une première distance radiale par rapport à l'axe (L6), et une deuxième surface de peigne (463c) à une deuxième distance radiale par rapport à l'axe (L6) et une deuxième surface de came (463c) à une deuxième distance radiale par rapport à l'axe (L6), où la première distance radiale est supérieure à la deuxième distance radiale, où la première surface de came (432c) et l'autre élément de retenue (44c) sont disposés en contact frictionnel serré l'un avec l'autre lorsque l'autre actionneur de verrouillage (46c) est disposé dans la première position, et où la première surface de came (462c) et l'autre élément de retenue (44c) sont disposés séparés l'un de l'autre lorsque l'autre actionneur de verrouillage (46c) est disposé dans la deuxième position.

13. Structure pliante (10c) pour une bicyclette selon la revendication 9, dans laquelle l'actionneur de verrouillage (43c) disposé dans la première position est adapté pour être retenu par un élément support (33c) et où l'autre actionneur de verrouillage (46c) disposé dans la première position est adapté pour être retenu par un élément support (33c), où l'actionneur de verrouillage (43c) et l'autre actionneur de verrouillage (46c) sont adapté pour être retenus par l'élément support (33c) de manière individuelle ou simultanément, où l'élément support (33c) est disposé sur le deuxième corps (30c), où l'actionneur de verrouillage (43c) comporte une extrémité d'engagement (434c) et l'élément support (33c) s'engage dans l'extrémité d'engagement (434c) pour retenir l'actionneur de verrouillage (43), où l'autre l'actionneur de verrouillage (46c) comporte une autre extrémité d'engagement (464c) et l'élément support (33c) s'engage dans l'autre extrémité d'engagement (464c) pour retenir l'autre actionneur de verrouillage (46c), où l'élément support (33c) peut se mettre dans une première position retenant sélectivement l'actionneur de verrouillage (43c) et l'autre actionneur de verrouillage (46c) de manière individuelle ou simultanée et une deuxième position de désengagement de l'extrémité d'engagement (434c) et de l'autre extrémité d'engagement (464c), où l'élément support (33c) est monté de manière rotative sur le deuxième corps (30c) et où l'élément support (33c) est engagé avec un élément élastique et est déformé par celui-ci.
